# EUROPEAN PATENT APPLICATION

(11) **EP 4 704 427 A1**
(43) Date of publication of application: **04.03.2026**
(21) Application number: 24748812.5
(22) Date of filing: 27.03.2024
(51) Int. Cl.: H04N 21/431

(54) **VIDEO PLAYBACK METHOD AND APPARATUS, COMPUTER DEVICE, AND STORAGE MEDIUM**

(30) Priority: 27.04.2023 CN 202310474571
(71) Applicant: Beijing Zitiao Network Technology Co., Ltd., Beijing 100190 (CN)
(72) Inventor: LIU, Siyu, Beijing 100028 (CN)
(74) Representative: Marks & Clerk LLP
(86) International application number: PCT/CN2024/084013
(87) International publication number: WO 2024/222355

(57) **Abstract**

Embodiments of the present disclosure provide a video playing method and apparatus, a computer device, and a storage medium. The video playing method includes: playing a first video on a video playing interface, in which the first video is a video corresponding to triggered first video preview information among a plurality of pieces of video preview information in a search result corresponding to a video search request; playing, in response to a trigger operation on an artificial intelligence identifier on the video playing interface, the first video in a first area of a conversation interface for a conversation with an intelligent robot, and displaying the search result and conversation content of the conversation with the intelligent robot in a second area of the conversation interface; and switching, in response to a trigger operation on second video preview information in the search result, the first video played in the first area to a second video corresponding to the second video preview information.

## Description

The present application claims priority to Chinese Patent Application No. 202310474571.8, filed on April 27, 2023, which is incorporated herein by reference in its entirety as a part of the present application.

### TECHNICAL FIELD

Embodiments of the present disclosure relate to a video playing method and apparatus, a computer device, and a storage medium.

### BACKGROUND

With the development of artificial intelligence technology, users can quickly obtain information through the artificial intelligence technology. For example, an intelligent robot, which is a tool that chats with a user to provide personalized answers, may be used to quickly obtain information that the user is interested in.

When watching a video, if a user wants to chat with an intelligent robot to obtain more information about the video, the user needs to close the current video interface and then enter a conversation interface to have a conversation with the intelligent robot to obtain an answer result from the intelligent robot. If the user wants to continue watching the video after obtaining the relevant answer result from the intelligent robot, the user needs to switch back to the video interface. The process of obtaining the relevant information of the video in this way is rather cumbersome.

### SUMMARY

Embodiments of the present disclosure provide at least a video playing method and apparatus, a computer device, and a storage medium.

According to a first aspect, an embodiment of the present disclosure provides a video playing method, including:
playing a first video on a video playing interface, in which the first video is a video corresponding to triggered first video preview information among a plurality of pieces of video preview information in a search result corresponding to a video search request;
playing, in response to a trigger operation on an artificial intelligence identifier on the video playing interface, the first video in a first area of a conversation interface for a conversation with an intelligent robot, and displaying the search result and conversation content of the conversation with the intelligent robot in a second area of the conversation interface; and
switching, in response to a trigger operation on second video preview information in the search result, the first video played in the first area to a second video corresponding to the second video preview information.

In an optional implementation, the search result includes a plurality of video topics and video preview information under each video topic.

The method further includes:
playing, in response to the completion of playing of the first video, another video under a first video topic corresponding to the first video in the first area.

In an optional implementation, the method further includes:
playing, in response to playing of all videos under the first video topic being completed, a video under another video topic in the first area in an order in which the video topics are arranged in the search result; or
playing, in response to a trigger operation on a displayed second video topic, videos under the second video topic in the first area.

In an optional implementation, the playing a first video on a video playing interface includes:
displaying, in response to the video search request, a plurality of video topics matching the video search request and video preview information under each video topic, the video preview information corresponding to a single video or a video set; and
playing, in response to a trigger operation on a displayed first video topic or in response to a trigger operation on video preview information under the first video topic, the first video under the first video topic on the video playing interface.

In an optional implementation, the displaying conversation content of the conversation with the intelligent robot on the conversation interface includes:
receiving first question information that is entered on the conversation interface and directed to the currently played video; and
obtaining and displaying first answer information that is provided by the intelligent robot and corresponds to the first question information.

In an optional implementation, the method further includes:
receiving second question information that is entered on the conversation interface for searching for a video;
obtaining and displaying second answer information that is provided by the intelligent robot and corresponds to the second question information, the second answer information including at least one candidate topic matching the second question information, or video identification information of at least one video under a target topic, the target topic is a video topic included in the search result, and the candidate topic is not a video topic included in the search result; and
playing, in response to a trigger operation on any candidate topic, a video under the candidate topic on the video playing interface, or playing, in response to a trigger operation on any piece of video identification information, a video corresponding to the video identification information on the video playing interface.

In an optional implementation, the displaying, in response to the video search request, a plurality of video topics matching the video search request and video preview information under each video topic includes:
displaying an initial search result in response to the video search request, the initial search result including video preview information of videos matching the video search request; and
displaying, in response to the receipt of an artificial intelligence calling operation, a plurality of video topics determined by the intelligent robot based on the initial search result, and video preview information under each video topic.

In an optional implementation, the video topic is obtained by clustering the videos in the search result corresponding to the video search request; and
the displayed video topic includes a topic keyword and topic description information, the topic description information being generated based on text description information and/or video frame recognition results of the videos under the video topic, and the topic keyword being generated based on interactive behavior information corresponding to the videos under the video topic and/or the topic description information.

According to a second aspect, an embodiment of the present disclosure further provides a video playing apparatus, including:
a playing unit configured to play a first video on a video playing interface, in which the first video is a video corresponding to triggered first video preview information among a plurality of pieces of video preview information in a search result corresponding to a video search request;
a first response unit configured to play, in response to a trigger operation on an artificial intelligence identifier on the video playing interface, the first video in a first area of a conversation interface for a conversation with an intelligent robot, and to display the search result and conversation content of the conversation with the intelligent robot in a second area of the conversation interface;
a second response unit configured to switch, in response to a trigger operation on second video preview information in the search result, the first video played in the first area to a second video corresponding to the second video preview information.

According to a third aspect, an embodiment of the present disclosure further provides a computer device. The computer device includes: a processor, a memory, and a bus, where the memory stores machine-readable instructions executable by the processor, the processor communicates with the memory through the bus when the computer device is running, and the machine-readable instructions, when executed by the processor, cause the steps of the first aspect described above, or the steps of any one of the possible implementations in the first aspect to be performed.

According to a fourth aspect, an embodiment of the present disclosure further provides a computer-readable storage medium having stored thereon a computer program that, when run by a processor, causes the steps of the first aspect described above, or the steps of any one of the possible implementations in the first aspect to be performed.

In order to make the above objectives, features, and advantages of the present disclosure more obvious and comprehensible, a detailed description will be provided below with reference to the preferred embodiments and in conjunction with the accompanying drawings.

### BRIEF DESCRIPTION OF DRAWINGS

In order to more clearly illustrate the technical solutions in the embodiments of the present disclosure, the accompanying drawings for describing the embodiments will be briefly described below. The accompanying drawings herein, which are incorporated into and form a part of the description, show the embodiments in line with the present disclosure and are used in conjunction with the description to illustrate the technical solutions of the present disclosure. It should be understood that the following accompanying drawings only show some embodiments of the present disclosure, and therefore should not be considered as a limitation on the scope. For those of ordinary skill in the art, other related accompanying drawings can be derived from these accompanying drawings without creative efforts.
Fig. 1 is a flowchart of a video playing method according to an embodiment of the present disclosure;
Fig. 2 is a schematic diagram of playing a first video on a video playing interface according to an embodiment of the present disclosure;
Fig. 3 is a schematic diagram of playing a first video in a first area of a conversation interface for a conversation with an intelligent robot and displaying a search result and conversation content of the conversation with the intelligent robot in a second area of the conversation interface according to an embodiment of the present disclosure;
Fig. 4 is a schematic diagram of a search result according to an embodiment of the present disclosure;
Fig. 5 is a schematic diagram of a video playing apparatus according to an embodiment of the present disclosure; and
Fig. 6 is a schematic diagram of a computer device according to an embodiment of the present disclosure.

### DETAILED DESCRIPTION

In order to make the objectives, technical solutions, and advantages of embodiments of the present disclosure clearer, the technical solutions in the embodiments of the present disclosure will be clearly and completely described below with reference to the accompanying drawings in the embodiments of the present disclosure. Apparently, the described embodiments are merely some rather than all of the embodiments of the present disclosure. In general, the components of the embodiments of the present disclosure described and shown in the accompanying drawings herein can be arranged and designed in various configurations. Therefore, the following detailed description of the embodiments of the present disclosure, which are set forth in the accompanying drawings, is not intended to limit the scope of protection of the present disclosure, but merely represents selected embodiments of the present disclosure. All other embodiments obtained by those skilled in the art based on the embodiments of the present disclosure without creative efforts shall fall within the scope of protection of the present disclosure.

It should be noted that similar reference signs and letters refer to similar items in the following accompanying drawings. Therefore, once a specific item is defined in one of the accompanying drawings, it need not be further defined and explained in subsequent accompanying drawings.

The term "and/or" herein is used to describe an association relationship, and indicates that three relationships may exist. For example, A and/or B may indicate that only A exists, both A and B exist, and only B exists. In addition, the term "at least one" herein indicates any one of a plurality of types or any combination of at least two of a plurality of types. For example, including at least one of A, B, and C may indicate including any one or more elements selected from a set consisting of A, B, and C.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

With the development of artificial intelligence technology, users can quickly obtain information through the artificial intelligence technology. For example, an intelligent robot, which is a tool that chats with a user to provide personalized answers, may be used to quickly obtain information that the user is interested in.

When watching a video being played on a video playing interface, if a user wants to chat with an intelligent robot to obtain more information about the currently played video, the user usually needs to close the current video interface and then switch to a conversation interface to have a conversation with the intelligent robot to obtain an answer result from the intelligent robot. Alternatively, an interface for a chat with the intelligent robot is displayed by covering the current video playing interface. Both of the methods will discontinue the user's watching the video.

Based on the above research, the present disclosure provides a video playing method and apparatus, a computer device, and a storage medium. In an embodiment of the present disclosure, a corresponding search result may be displayed in response to the video search request. The search result may include a plurality of pieces of video preview information. After a trigger operation on first video preview information among the plurality of pieces of video preview information in the search result is detected, a first video is played on a video playing interface. The video playing interface may further include an artificial intelligence identifier. In this case, in response to a trigger operation on the artificial intelligence identifier, the first video may be played in a first area of a conversation interface of a conversation with an intelligent robot, and the search result and conversation content of the conversation with the intelligent robot may be displayed in a second area of the conversation interface.

This implementation enables the user to have a conversation with the intelligent robot to obtain more information about the first video while watching the video, which satisfies the need to continuously obtain more relevant information while continuously watching the video without frequently switching between the video playing interface and the conversation interface for the conversation with the intelligent robot. In addition, the video display area and the area where the conversation content is located do not interfere with each other, so that the video content and the conversation content will not block each other, which not only ensures the video watching experience, but also facilitates the conversation with the intelligent robot. Furthermore, search results for the video search are also displayed synchronously in the area where the conversation content is located, so that the user can further select other videos to watch in the current conversation interface without returning to the video search interface to switch videos, which facilitates the switching and watching of different videos.

To facilitate an understanding of this embodiment, a video playing method disclosed in an embodiment of the present disclosure is first described in detail. An execution body of the video playing method provided in the embodiment of the present disclosure is generally a computer device with some computing capabilities.

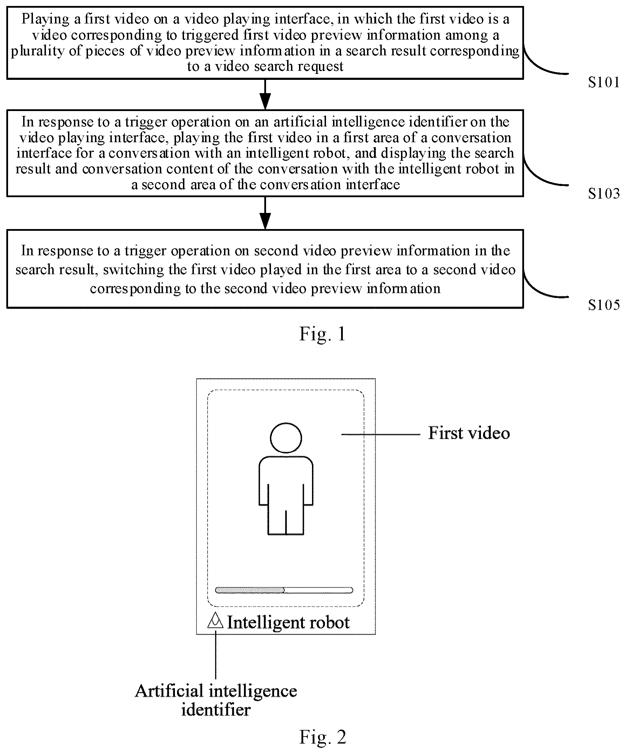

Fig. 1 is a flowchart of a video playing method according to an embodiment of the present disclosure. The video playing method includes steps S101 to S 105.

S101, playing a first video on a video playing interface, in which the first video is a video corresponding to triggered first video preview information among a plurality of pieces of video preview information in a search result corresponding to a video search request.

In the embodiment of the present disclosure, after the video search request is detected, the search result corresponding to the search request may be determined.

In a possible implementation, the search result may include a plurality of pieces of video preview information, and the plurality of pieces of video preview information may be displayed in a search result interface. The video preview information in the search result here may include picture information and/or text information. The picture information may be either a static picture (e.g., a first frame of a video) or a dynamic picture (e.g., the first N frames of a video, where N is a positive integer) of a video, and the text information may be used to indicate a video topic of a video.

In the embodiment of the present disclosure, the video preview information may correspond to one video or a video set consisting of a plurality of videos. In this case, the plurality of videos in the video set are interrelated videos. For example, the interrelated videos may be a plurality of videos corresponding to the same video topic.

In another possible implementation, a plurality of video topics matching the video search request and video preview information under each video topic may be displayed in response to the video search request. The video preview information corresponds to a single video or a video set.

The plurality of video topics and the video preview information under each video topic here are displayed to provide an overview of the video information, making it easy for users to quickly determine what kind of videos they are interested in, thereby improving the video screening efficiency.

In a specific implementation, the videos may be displayed in the way as mentioned above after the artificial intelligence mode is called, and before the calling of the artificial intelligence mode, the videos may be displayed in a common search result display form (i.e., sequentially displaying the video preview information of the videos).

Specifically, an initial search result may be displayed in response to the video search request, the initial search result including video preview information of videos matching the video search request.

The initial search result here may be understood as a search result corresponding to the video search request that is obtained by a server searching across the web after receiving the video search request.

If users want to experience an intelligent search result display form, the calling of artificial intelligence may be triggered to allow the video search result to be categorized and summarized by the intelligent robot, so as to display a plurality of video topics determined by the intelligent robot based on the initial search result, and video preview information under each video topic.

The artificial intelligence calling operation may be performed by pulling down the current interface to call the robot.

The artificial intelligence calling operation may be performed before the video search request is input or after the video search request is input to obtain the initial search result, and the time to trigger the artificial intelligence calling operation is not limited in the present disclosure as long as the artificial intelligence calling operation can be implemented.

In this implementation, the search result may be summarized and then displayed to the user according to the video topics and the video preview information, so that the user may have clear and complete understanding of the search result based on the video topics and then choose, from the video topics, a video topic that is more in line with the user's search need to watch the video, thereby improving the user's search experience.

Then, in response to a trigger operation on a displayed first video topic or in response to a trigger operation on video preview information under the first video topic, the first video under the first video topic may be played on the video playing interface.

The video topic that is first triggered among the plurality of video topics may be determined as the first video topic, or the video preview information that is first triggered among the plurality of pieces of video preview information is determined as the first video preview information. In this case, after the first video preview information is detected or after the first video topic is triggered, the video playing interface is displayed, and the first video corresponding to the first video preview information (i.e., the first video under the first video topic) is played on the video playing interface.

Here, if the first video preview information corresponds to one video, the first video is the video corresponding to the first video preview information, or if the first video preview information corresponds to a video set, the first video may be the first one of videos in the video set corresponding to the first video preview information.

The displayed video playing interface may be as shown in Fig. 2. In this case, the video playing interface shown in Fig. 2 may include an artificial intelligence identifier, and after a trigger operation on the artificial intelligence identifier is detected, the following steps S103 to S 105 are performed.

S103, in response to a trigger operation on an artificial intelligence identifier on the video playing interface, playing the first video in a first area of a conversation interface for a conversation with an intelligent robot, and displaying the search result and conversation content of the conversation with the intelligent robot in a second area of the conversation interface.

In the embodiment of the present disclosure, the artificial intelligence identifier may be used to indicate an identifier that triggers the current user to have a conversation with the intelligent robot. The artificial intelligence identifier may be set on the lower left of the video playing interface, or on the right side of the video playing interface, etc.

In this case, the conversation interface showing a conversation with the intelligent robot may be displayed in response to the trigger operation on the artificial intelligence identifier. In this case, the first video may continue to play in the first area of the conversation interface, the search result corresponding to the video search request mentioned above may be displayed in the second area of the conversation interface, and the content of conversation with the intelligent robot may be displayed below the search result.

In this case, the displayed content of conversation with the intelligent robot may be, after the conversation interface is displayed, input content directly obtained and displayed in a text input box on the conversation interface, and content of answer from the intelligent robot based on the input content.

Alternatively, the content of conversation with the intelligent robot displayed after the conversation interface is displayed may be a conversation content that is automatically sent to the intelligent robot in response to the trigger operation on the artificial intelligence identifier on the video playing interface. For example, the conversation content may be a question content that most users ask when they have a conversation with the intelligent robot. Next, the user's trigger operation on the text input box on the conversation interface may be detected, and the input content of the text input box may be obtained and displayed after the trigger operation is detected.

Alternatively, the content of conversation with the intelligent robot displayed after the conversation interface is displayed may be a conversation content that is automatically sent to the user by the intelligent robot in response to the trigger operation on the artificial intelligence identifier on the video playing interface. For example, the conversation content may be guessed content to be asked that is determined based on information of questions that most users ask when they have a conversation with the intelligent robot. Next, the user's trigger operation on the text input box on the conversation interface may be detected, and the input content of the text input box may be obtained and displayed after the trigger operation is detected.

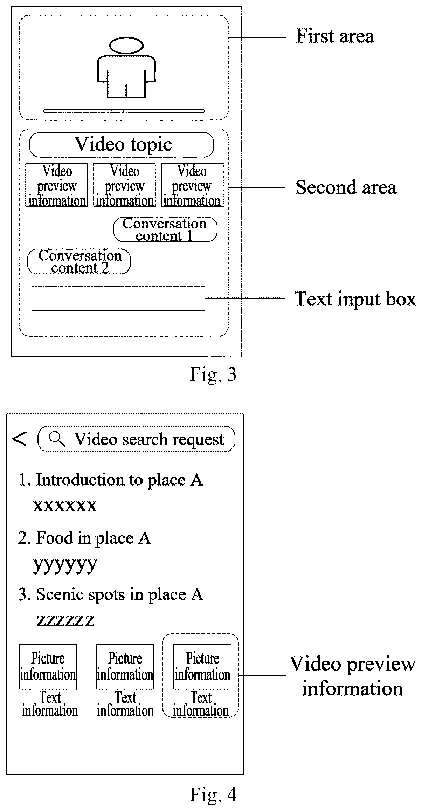

In the embodiment of the present disclosure, the conversation interface showing a conversation with the intelligent robot displayed in response to the trigger operation on the artificial intelligence identifier on the video playing interface may be as shown in Fig. 3. In this case, the first video is played in the first area shown in Fig. 3, and the search result (in which video preview information and a video topic are included) and the conversation content (such as conversation content 1 and conversation content 2) showing the conversation with the intelligent robot are displayed in the second area shown in Fig. 3. As shown in Fig. 3, the second area of the conversation interface may also include a text input box for the user to obtain the conversation content that is entered by the user.

In the embodiment of the present disclosure, video preview information (i.e., second video preview information) other than the first video preview information among the plurality of pieces of video preview information in the search result displayed on the conversation interface may be triggered, and then the following step S105 is performed.

S105, in response to a trigger operation on second video preview information in the search result, switching the first video played in the first area to a second video corresponding to the second video preview information.

Here, if the second video preview information corresponds to one video, the second video is the video corresponding to the second video preview information, or if the second video preview information corresponds to a video set, the second video may be the first one of videos in the video set corresponding to the second video preview information.

As can be seen from the above description, according to the embodiment of the present disclosure, in response to the trigger operation on the artificial intelligence identifier on the video playing interface, the conversation interface for the conversation with the intelligent robot may be displayed, the first video may be played in the first area of the conversation interface, and the search result and the content of conversation with the intelligent robot may be displayed in the second area of the conversation interface. This implementation enables the user to have a conversation with the intelligent robot to obtain more information about the first video while watching the video, which satisfies the need to continuously obtain more relevant information while continuously watching the video without frequently switching between the video playing interface and the conversation interface for the conversation with the intelligent robot. In addition, the video display area and the area where the conversation content is located do not interfere with each other, so that the video content and the conversation content will not block each other, which not only ensures the video watching experience, but also facilitates the conversation with the intelligent robot. Furthermore, search results for the video search are also displayed synchronously in the area where the conversation content is located, so that the user can further select other videos to watch in the current conversation interface without having to return to the video search interface to switch videos, which facilitates the switching and watching of different videos.

As described above, the search result corresponding to the video search request may include a plurality of video topics and video preview information under each video topic. The video topic here is obtained by clustering the videos in the search result corresponding to the video search request. The video topic may include a topic keyword and topic description information.

The topic description information is generated based on the text description information and/or video frame recognition results (e.g., obtained by image recognition based on an optical recognition algorithm) of the videos under the video topic.

The text description information of the video here may include text information preset for the video. For example, the text description information may be tag information of the video, or title information of the video, or text information corresponding to the video content, etc.

The topic keyword is generated based on interactive behavior information corresponding to the videos under the video topic, and/or the topic description information.

The interactive behavior information corresponding to the videos here may be understood as search request information when the video is searched, comment information related to the video, etc.

For example, when the video search request is "place A", the search result corresponding to the search request may be as shown in Fig. 4. As shown in Fig. 4, the search result may include three video topics, in which a video topic 1 corresponds to a topic keyword "Introduction to place A", and the video topic 1 corresponds to text description information "xxxxxx"; a video topic 2 corresponds to a topic keyword "Food in place A", and the video topic 2 corresponds to text description information "yyyyyy"; and a video topic 3 corresponds to a topic keyword "Scenic spots in place A", and the video topic 3 corresponds to text description information "zzzzzz".

In the embodiment of the present disclosure, each video topic in the search result may correspond to one piece of video preview information, and thus the search result as shown in Fig. 4 may include three pieces of video preview information, each of which may include picture information and/or text information. The picture information in the video preview information is related to video frames of the video/video set corresponding to the video preview information, and the text information in the video preview information is related to the video topic. For example, the text description information in the video preview information may be a topic keyword.

In the embodiment of the present disclosure, according to the steps described in S101 to S 103, after the first video is played in the first area of the conversation interface for the conversation with the intelligent robot, in response to the completion of playing of the first video, other videos under the first video topic corresponding to the first video may be played in the first area.

In the above implementation, the videos under the first video topic that the user is interested in may be continuously played in the first area of the conversation interface without the user having to manually switch the played videos, thereby improving the user's watching experience. Moreover, by means of continuously playing different videos under the first video topic, the user can quickly learn more and richer content related with the video topic, thereby improving the user's satisfaction with the search result.

In an optional implementation, in response to playing of all videos under the first video topic being completed, a video under another video topic is played in the first area in an order in which the video topics are arranged in the search result.

The order in which the video topics are arranged in the search result is related to how the search result is displayed. For example, if the search result is displayed line by line from top to bottom, the order in which the video topics are arranged in the search result may indicate the order in which they are arranged from top to bottom; or if the search result is displayed from left to right, the order in which the video topics are arranged in the search result may indicate the order in which they are arranged from left to right.

For example, when the search result is as shown in Fig. 4, the video topics are arranged in the search result in the following order: the video topic 1 (i.e., "introduction to place A" in Fig. 4), then the video topic 2 (i.e., "food in place A" in Fig. 4), and finally the video topic 3 (i.e., "attractions in place A" in Fig. 4).

Then, assuming that the first video topic is the video topic 1, after playing of all videos under the video topic 1 is completed, the videos under the video topic 2 may be played, and finally the videos under video topic 3 may be played.

Alternatively, when playing of all videos under the first video topic is completed, the videos under the second video topic are played in the first area in response to a trigger operation on the displayed second video topic.

In the above implementation, different videos may be played continuously in the first area of the conversation interface, which allows the user to continuously learn about the videos corresponding to the video search request without user interaction, thereby simplifying the user's operation and improving the efficiency of viewing the search result.

In an optional implementation, the S103 of displaying conversation content of the conversation with the intelligent robot on the conversation interface specifically includes the following steps.

At a first step, first question information that is entered on the conversation interface and directed to the currently played video is received.

The first question information that is entered on the conversation interface may be data in text form, and in this case the data in text form may be question keywords or complete question data. Alternatively, the first question information may be data in the form of speech, and in this case, when the first question information is received, speech data may be directly displayed on the conversation interface, or a converted text may be displayed on the conversation interface through speech-to-text technology.

In the embodiment of the present disclosure, the first question information is used to indicate an obtaining request for obtaining information related to the currently played video, and in this case, after the first question information is received, the following procedure in a second step may be proceeded.

At the second step, first answer information that is provided by the intelligent robot and corresponds to the first question information is obtained and displayed.

In the specific implementation, after the first question information is received, the first question information may be sent to the intelligent robot to enable the intelligent robot to generate first answer information corresponding to the first question information based on a built-in language model.

Alternatively, the intelligent robot may initiate a search using the first question information as a search request to obtain a search result corresponding to the search request, and then use at least part of the corresponding search result as the first answer information.

The first answer information here may be at least one of text information, speech information, video information, and hyperlink information.

In the above implementation, the first question information may be received, and then the first answer information that corresponds to the first question information and is provided by the intelligent robot may be obtained and displayed, such that the users can obtain the information they want to know through the interaction with the intelligent robot, thereby simplifying the users' search path for the information they want to know and improving the efficiency of obtaining information.

In an optional implementation, according to the embodiment of the present disclosure, second question information that is entered on the conversation interface for searching for a video may be received.

In this case, the second question information may indicate a video search request.

In the embodiment of the present disclosure, after the second question information for searching for a video is received, the second question information may be sent to the intelligent robot. In this case, the intelligent robot may perform a search based on the second question information to obtain a search result, i.e., second answer information, corresponding to the second question information.

Then, the second answer information that is provided by the intelligent robot and corresponds to the second question information may be obtained and displayed.

The second answer information includes: at least one candidate topic matching the second question information, or video identification information of at least one video under a target topic. The target topic is a video topic included in the aforementioned search result obtained before playing the first video, and the candidate topic is a video topic not included in the search result obtained before playing the first video.

The video identification information of at least one video under the target topic here may indicate video preview information under the target topic, or a video title of at least one video under the target topic, or a web interface address including the at least one video under the target topic, etc.

In the embodiment of the present disclosure, after the second question information is displayed on the conversation interface, in response to a trigger operation on any candidate topic, a video under the candidate topic may be played on the video playing interface; or in response to a trigger operation on any piece of video identification information, the video corresponding to the video identification information may be played on the video playing interface.

In the above implementation, the second question information for searching for a video may be received to display the candidate topic or the video identification information related to the second question information, such that the user may trigger the candidate topic or the video identification information to switch the video played in the first area of the conversation interface, so as to enable the user to achieve seamless switching of the played video without switching interfaces, thereby improving the user experience. The candidate topic is a video topic that is not included in the search result obtained before playing the first video. In this way, the second answer information obtained by the user is not limited to the current search result, thereby improving the accuracy of the obtained second answer information.

Those skilled in the art can understand that, in the above methods of the specific implementations, the order in which the steps are written does not imply a strict execution order, and does not constitute any limitation on the implementation process. The specific execution order of the steps should be determined by their functions and possible internal logics.

Based on the same inventive concept, the embodiments of the present disclosure further provide a video playing apparatus corresponding to the video playing method. Since the principle of the solution of the apparatus according to the embodiments of the present disclosure is similar to that of the video playing method described above according to the embodiments of the present disclosure, the implementation of the apparatus can be achieved with reference to the implementations of the methods, which will not be repeated.

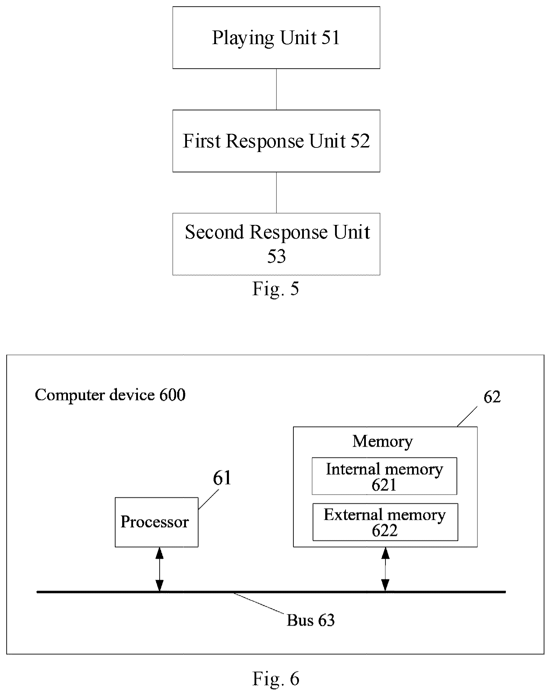

As shown in Fig. 5, which is a schematic diagram of a video playing apparatus according to an embodiment of the present disclosure, the video playing apparatus includes a playing unit 51, a first response unit 52, and a second response unit 53.

The playing unit 51 is configured to play a first video on a video playing interface. The first video is a video corresponding to triggered first video preview information among a plurality of pieces of video preview information in a search result corresponding to a video search request.

The first response unit 52 is configured to play, in response to a trigger operation on an artificial intelligence identifier on the video playing interface, the first video in a first area of a conversation interface for a conversation with an intelligent robot, and display the search result and conversation content of the conversation with the intelligent robot in a second area of the conversation interface.

The second response unit 53 is configured to switch, in response to a trigger operation on second video preview information in the search result, the first video played in the first area to a second video corresponding to the second video preview information.

As can be seen from the above description, the video playing interface according to the embodiment of the present disclosure may include an artificial intelligence identifier. In this case, in response to a trigger operation on the artificial intelligence identifier, the first video may be played in a first area of a conversation interface of a conversation with an intelligent robot, and the search result and conversation content of the conversation with the intelligent robot may be displayed in a second area of the conversation interface. This implementation enables the user to have a conversation with the intelligent robot to obtain more information about the first video while watching the video, which satisfies the need to continuously obtain more relevant information while continuously watching the video without frequently switching between the video playing interface and the conversation interface for the conversation with the intelligent robot. In addition, the video display area and the area where the conversation content is located do not interfere with each other, so that the video content and the conversation content will not block each other, which not only ensures the video watching experience, but also facilitates the conversation with the intelligent robot. Furthermore, search results for the video search are also displayed synchronously in the area where the conversation content is located, so that the user can further select other videos to watch in the current conversation interface without having to return to the video search interface to switch videos, which facilitates the switching and watching of different videos.

In a possible implementation, the search result includes a plurality of video topics and video preview information under each video topic. In this case, the apparatus is further configured to play, in response to the completion of playing of the first video, another video under a first video topic corresponding to the first video in the first area.

In a possible implementation, the apparatus is further configured to play, in response to playing of all videos under the first video topic being completed, a video under another video topic in the first area in an order in which the video topics are arranged in the search result; or
play, in response to a trigger operation on a displayed second video topic, videos under the second video topic in the first area.

In a possible implementation, the playing unit 51 is further configured to:
display, in response to the video search request, a plurality of video topics matching the video search request and video preview information under each video topic, the video preview information corresponding to a single video or a video set; and
play, in response to a trigger operation on a displayed first video topic or in response to a trigger operation on video preview information under the first video topic, the first video under the first video topic on the video playing interface.

In a possible implementation, the first response unit 52 is further configured to:
receive first question information that is entered on the conversation interface and directed to the currently played video; and
obtain and display first answer information that is provided by the intelligent robot and corresponds to the first question information.

In a possible implementation, the apparatus is further configured to:
receive second question information that is entered on the conversation interface for searching for a video;
obtain and display second answer information that is provided by the intelligent robot and corresponds to the second question information, the second answer information including at least one candidate topic matching the second question information, or video identification information of at least one video under a target topic, the target topic is a video topic included in the search result, and the candidate topic is not a video topic included in the search result; and
play, in response to a trigger operation on any candidate topic, a video under the candidate topic on the video playing interface, or play, in response to a trigger operation on any piece of video identification information, a video corresponding to the video identification information on the video playing interface.

In a possible implementation, the playing unit 51 is further configured to:
display an initial search result in response to the video search request, the initial search result including video preview information of videos matching the video search request; and
display, in response to the receipt of an artificial intelligence calling operation, a plurality of video topics determined by the intelligent robot based on the initial search result, and video preview information under each video topic.

In a possible implementation, the video topic is obtained by clustering the videos in the search result corresponding to the video search request; and
the displayed video topic includes a topic keyword and topic description information, the topic description information is generated based on text description information and/or video frame recognition results of the videos under the video topic, and the topic keyword is generated based on interactive behavior information corresponding to the videos under the video topic and/or the topic description information.

For the description of the processing processes of various modules in the apparatus, and the interaction processes between the modules, reference may be made to the related description in the above method embodiments, and details are not described herein again.

Corresponding to the video playing method shown in Fig. 1, an embodiment of the present disclosure further provides a computer device 600. As shown in Fig. 6, which is a schematic diagram of a structure of the computer device 600 according to an embodiment of the present disclosure, the computer device includes:
a processor 61, a memory 62, and a bus 63. The memory 62 is configured to store execution instructions, and includes an internal memory 621 and an external memory 622. The internal memory 621 here is also referred to as a primary memory, which is configured to temporarily store operation data of the processor 61, and data exchanged with the external memory 622 such as a hard disk. The processor 61 exchanges data with the external memory 622 through the internal memory 621. When the computer device 600 is running, the processor 61 communicates with the memory 62 through the bus 63, so that the processor 61 executes the following instructions:
playing a first video on a video playing interface, in which the first video is a video corresponding to triggered first video preview information among a plurality of pieces of video preview information in a search result corresponding to a video search request;
playing, in response to a trigger operation on an artificial intelligence identifier on the video playing interface, the first video in a first area of a conversation interface for a conversation with an intelligent robot, and displaying the search result and conversation content of the conversation with the intelligent robot in a second area of the conversation interface; and
switching, in response to a trigger operation on second video preview information in the search result, the first video played in the first area to a second video corresponding to the second video preview information.

An embodiment of the present disclosure further provides a computer-readable storage medium, which stores a computer program, and the computer program, when run by a processor, causes the steps of the video playing method described in the above method embodiments to be performed. The storage medium may be a volatile or non-volatile computer-readable storage medium.

It can be clearly understood by those skilled in the art that, for convenience and brevity of description, for the specific operation processes of the system and apparatus described above, reference may be made to the corresponding processes in the foregoing method embodiments, and details are not repeated herein. In the several embodiments provided in the present disclosure, it should be understood that the disclosed system, apparatus, and method may be implemented in other manners. The apparatus embodiment described above is merely an example. For example, the unit division is merely logical function division and may be other division during actual implementation. For another example, a plurality of units or components may be combined or integrated into another system, or some features may be omitted or not implemented. In addition, the displayed or discussed mutual couplings, direct couplings, or communication connections may be implemented through some communication interfaces. The indirect couplings or communication connections between the apparatuses or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, various functional units in the various embodiments of the present disclosure may be integrated into one processing unit, each of the units may exist alone physically, or two or more units may be integrated into one unit.

If the functions are implemented in the form of a software functional unit and sold or used as an independent product, the functions may be stored in a non-volatile computer-readable storage medium executable by a processor. Based on such an understanding, the technical solutions of the present disclosure essentially, or its contribution to the prior art, or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present disclosure. Moreover, the foregoing storage medium includes a USB flash drive, a removable hard disk, a read-only memory (ROM), a random access memory (RAM), a magnetic disk, an optical disc, or other various media that can store program code.

It should be finally noted that the embodiments described above are merely specific implementations of the present disclosure, and used for illustrating rather than limiting the technical solutions of the present disclosure, and the scope of protection of the present disclosure is not limited thereto. Although the present disclosure has been described in detail with reference to the foregoing embodiments, those of ordinary skill in the art should understand that, within the technical scope disclosed in the present disclosure, any person skilled in the art could still modify the technical solutions specified in the foregoing embodiments, or readily figure out any variation thereof, or make equivalent substitution to some of the technical features thereof. However, these modifications, variations, or substitutions do not make the essence of the corresponding technical solutions depart from the spirit and scope of the technical solutions of the embodiments of the present disclosure, and shall fall within the scope of protection of the present disclosure. Therefore, the scope of protection of the present disclosure shall be subject to the scope of protection of the claims.

## Claims

1. A video playing method, comprising:
playing a first video on a video playing interface, wherein the first video is a video corresponding to triggered first video preview information among a plurality of pieces of video preview information in a search result corresponding to a video search request;
playing, in response to a trigger operation on an artificial intelligence identifier on the video playing interface, the first video in a first area of a conversation interface for a conversation with an intelligent robot, and displaying the search result and conversation content of the conversation with the intelligent robot in a second area of the conversation interface; and
switching, in response to a trigger operation on second video preview information in the search result, the first video played in the first area to a second video corresponding to the second video preview information.

2. The method according to claim 1, wherein the search result comprises a plurality of video topics and video preview information under each video topic; and
the method further comprises:
playing, in response to the completion of the playing of the first video, another video under a first video topic corresponding to the first video in the first area.

3. The method according to claim 2, further comprising:
playing, in response to playing of all videos under the first video topic being completed, a video under another video topic in the first area in an order in which the video topics are arranged in the search result; or
playing, in response to a trigger operation on a displayed second video topic, videos under the second video topic in the first area.

4. The method according to claim 1, wherein the playing a first video on a video playing interface comprises:
displaying, in response to the video search request, a plurality of video topics matching the video search request and video preview information under each video topic, wherein the video preview information corresponds to a single video or a video set; and
playing, in response to a trigger operation on a displayed first video topic or in response to a trigger operation on video preview information under the first video topic, the first video under the first video topic on the video playing interface.

5. The method according to claim 1, wherein the displaying conversation content of the conversation with the intelligent robot on the conversation interface comprises:
receiving first question information that is entered on the conversation interface and directed to the currently played video; and
obtaining and displaying first answer information that is provided by the intelligent robot and corresponds to the first question information.

6. The method according to claim 1, further comprising:
receiving second question information that is entered on the conversation interface for searching for a video;
obtaining and displaying second answer information that is provided by the intelligent robot and corresponds to the second question information, wherein the second answer information comprises at least one candidate topic matching the second question information, or video identification information of at least one video under a target topic, the target topic is a video topic comprised in the search result, and the candidate topic is not a video topic comprised in the search result; and
playing, in response to a trigger operation on any candidate topic, a video under the candidate topic on the video playing interface, or playing, in response to a trigger operation on any piece of video identification information, a video corresponding to the video identification information on the video playing interface.

7. The method according to claim 4, wherein the displaying, in response to the video search request, a plurality of video topics matching the video search request and video preview information under each video topic comprises:
displaying an initial search result in response to the video search request, wherein the initial search result comprises video preview information of videos matching the video search request; and
displaying, in response to the receipt of an artificial intelligence calling operation, a plurality of video topics determined by the intelligent robot based on the initial search result, and video preview information under each video topic.

8. The method according to any one of claims 2 to 4 or 6 to 7, wherein the video topic is obtained by clustering the videos in the search result corresponding to the video search request; and
the displayed video topic comprises a topic keyword and topic description information, wherein the topic description information is generated based on text description information and/or video frame recognition results of the videos under the video topic, and the topic keyword is generated based on interactive behavior information corresponding to the videos under the video topic and/or the topic description information.

9. A video playing apparatus, comprising:
a playing unit, configured to play a first video on a video playing interface, wherein the first video is a video corresponding to triggered first video preview information among a plurality of pieces of video preview information in a search result corresponding to a video search request;
a first response unit, configured to play, in response to a trigger operation on an artificial intelligence identifier on the video playing interface, the first video in a first area of a conversation interface for a conversation with an intelligent robot, and to display the search result and conversation content of the conversation with the intelligent robot in a second area of the conversation interface; and
a second response unit, configured to switch, in response to a trigger operation on second video preview information in the search result, the first video played in the first area to a second video corresponding to the second video preview information.

10. A computer device, comprising a processor, a memory, and a bus, wherein the memory stores machine-readable instructions executable by the processor, the processor communicates with the memory through the bus when the computer device is running, and the machine-readable instructions, when executed by the processor, cause the video playing method according to any one of claims 1 to 8 to be performed.

11. A computer-readable storage medium, storing a computer program, wherein the computer program, when run by a processor, causes the video playing method according to any one of claims 1 to 8 to be performed.
